# EUROPEAN PATENT APPLICATION

(11) **EP 3 309 632 A1**
(43) Date of publication of application: **18.04.2018**
(21) Application number: 16193728.9
(22) Date of filing: 13.10.2016
(51) Int. Cl.: G05B 15/02

(54) **METHOD OF AN AUTOMATIC ON-DEMAND CONFIGURATION IN AN AUTOMATION SYSTEM**

(71) Applicant: ABB AG, 68309 Mannheim (DE)
(72) Inventor: Gamer, Thomas, 68782 Brühl (DE); Schmitt, Johannes, 68526 Ladenburg (DE); Kantz, Florian, 64404 Bickenbach (DE); Lehnert, Christian, 58513 Lüdenscheid (DE); Braun, Roland, 53859 Niederkassel Lülsdorf (DE)

(57) **Abstract**

The invention refers to a method for implementing an automatic on-demand configuration or re-configuration in a building automation system or sub- system during runtime based on information or data representing a plurality of devices of the building automation system comprising a unified information model wherein information or data is commonly available in a machine-readable format based on a sematic abstraction of the devices and during on-demand configuration or re-configuration all information or data are brought together in the Unified Information Model by describing, importing, or on demand reading information about the devices, about the context of their installation and about their provided functionality as well as applying reasoning functionality such as matchmaking between the semantic abstraction for devices that was used for planning of the system and the device specific information or automatic solvers.

## Description

The invention relates to a method of an automatic on-demand configuration in an automation system or sub/ system based on a unified information model according claim 1.

In legacy building automation or home automation systems used in building or a part of a building, e.g. in functional buildings, hotels, office buildings, hospitals, apartment buildings etc., a modification of the configuration usually requires a reconfiguration of the system regarding the entire building, automation and the control of heating, cooling systems, ventilation and air conditioning systems, lighting, sun-shading systems, fire protection and/or security systems via the building visualization.

Such a modification can be a device replacement, removal of a device, adding a new device or a software update of or extension with value-adding applications on top of the devices and their building automation specific functions - such as constant light control on top of a simple light actuator or occupancy control on top of a simple movement detector.

The disadvantages of the reconfiguration of a running building automation system, which is required in case of modifications, concern to a time-intensive, error-prone process requiring extensive manual work and expert knowledge. Technically, multiple aspects are of importance during this process and thus required. These aspects are most often derived manually with expert knowledge from available product information:
(1) Information or data about the devices themselves (e.g., device type, vendor, communication technologies, actual technology and device configuration, etc.)
(2) Information or data about the context of their installation (e.g., location, connectivity, etc.)
(3) Information or data about their targeted functionalities (e.g., functional area, interaction with other devices, user-rights, operation mode, etc.)

Today, state of the art in building automation systems is the following:
Regarding aspect (1) above, much information that is required to configure and integrate a device cannot be automatically obtained from the devices themselves (e.g., device type, vendor, or device configuration are not provided by KNX device during runtime directly - i.e. without additional information it is not possible to interpret the provided configuration data) or is not available in machine-readable, structured formats (e.g., Modbus commands are usually described using PDF documents). They have to be manually downloaded from external sources (e.g., KNX Prod Files, which contain device parameters, data types, value ranges, as well as dependencies between parameters or parameter groups specifying the actual configuration windows in the Engineering Tool Software; available on vendor websites) or exported from the various tools used during engineering and commissioning (e.g., Engineering Tool Software, such as graphical integration tool to create and configure LonWorks networks, vendor-specific BACnet tools (Building Automation and Control Network tools)) or unstructured documents have to be used (e.g., Building Specification, KNX addressing schema specification). In most of these cases, either manual integration effort or expert knowledge is required to interpret and integrate them.

In more advanced and upcoming systems it can be observed that the devices are more and more equipped with communication capabilities, protocols and interfaces that make it possible to obtain information from the devices themselves - e.g., a Bluetooth device profile contains a device self-description.

Regarding aspect (2) above, the context of the installation of a device is often determined during the electrical installation of the device. Therefore such information is commonly not available in a machine-interpretable format (e.g., noted down on paper or some kind of excel sheet) or can only partially be extracted from multiple different tools such as planning (e.g., Autodesk REVIT based on Building Information Modeling (BIM)) or engineering tools (e.g. Engineering Tool Software providing a KNX building structure).

For information or data about the context of their installation new upcoming mechanisms are stepwise enabling the automatic determination of the device context. Bluetooth beaconing techniques, for instance, can be used to determine the installation of a beacon equipped device on room level; network scanning mechanisms can be used to obtain information about the connectivity and neighboring devices; technologies like RFID can be used to identify a device, a location or the current user; digital building plans based on standards such as Building Information Modeling (BIM) offer machine-readable, technology- and vendor-agnostic information on device locations.

Regarding aspect (3) above, the intended functionality has to be derived from the planning and engineering data of the building automation system. Often various tools for the planning of a building and its building automation systems are in use. The contained information about the functionalities has to exported or extracted from these tools in order to configure and integrate all devices into the targeted system. Today this is based typically on manual processes where various types and formats for system description are in use and thus much effort and expert knowledge is required. Especially with multi-vendor and multi-protocol building automation solutions (which are common for commercial buildings and increasing in residential buildings), integrating different technologies during engineering on functional level is not well supported by tools and a time-consuming, manual work requiring experts. This is mainly because a multitude of proprietary solutions/tools is used today as well as the fact that standards often do not consider semantics - and even if they do in some aspects, they are often not interoperable between each other.

Due to insufficient information or data about the devices themselves, about the context of their installation and about their targeted functionalities - i.e. due to missing standardized formats, interfaces and means for automatic information provisioning - automatisms for reconfiguration cannot be applied in today's building automation systems.

A typical building automation system combines various technologies in order to cover various sub-systems (e.g., heating, ventilation, blinds, electricity, alarming, elevators, etc.). While some tools or mechanisms are working within one system, it is still a problem to apply them throughout a system that consists of a set of heterogeneous technologies. Some standardization activities are driving the development of common protocols, interfaces and formats and partly for information or data about the devices themselves and partly for information or data about the context of their installation.

These standards are providing a kind of abstraction layer for various technologies like field networks or field devices. While some technologies are focusing on a common layer for connectivity as Message Queue Telemetry Transport (MQTT), Hyper-text Transfer Protocol (HTTP), Representational State Transfer (REST) etc., others are focusing also on common interfaces to model and to address information as the Industrial standard OPC Unified Architecture (OPC UA, IEC 62541), Open Building Information Exchange (oBIX), etc. Based on such layers for streamlining communication and addressing of information, other standards are upcoming that provide an abstract definition of a device. These standards are describing the semantics of a device by describing the functionalities a device provides (see VDI- standard 3813; OIC) and might be good candidates to model, information or data about their targeted functionalities i.e. functional information. Still, the limitations of such standards in the context of this invention disclosure are that there is hardly integration between some of them, especially not in the sense of a unified model; moreover, there focus is only on information or data about their targeted functionalities i.e., there is no standard solution on how to combine this information with information or data about the devices themselves and about the context of their installation.

Thus, the invention relates to a method of an automatic on-demand configuration in a building automation system or sub/ system and is based on information or data of a building automation system comprising the features specified in claim 1. Advantageous embodiments and improvements of the system according to the invention are specified in further claims and in the description.

The basic concept is to make all information or data commonly available in a machine-readable format by a logical model that is called "Unified Information Model" (UIM), which is implemented as software code.

According to an aspect of the present invention is provided an automatic or semi-automatic on-demand configuration or reconfiguration of the Building Automation system during runtime - based on the availability and automatic or semi- automatic usage of semantics. From system perspective, all modifications can be seen as a reconfiguration; from device or subsystem perspective, e.g., adding a device might also be seen as a configuration. In the following, without loss of generality, it is used the notion reconfiguration only.

The targeted automatisms require information about the device, its context, and its functionality to be available in a machine-readable format. Based on this, the building automation system is able to automatically reconfigure in case of system modifications, such as replacing, removing, or adding a device as well as updating, extending, or installing a value-added application. In case, not all required information is available, a semi-automatic reconfiguration is still possible. Beyond this, the invention also proposes semantic systems that are able to integrate legacy subsystems (i.e., systems not created and ready for the proposed invention) by wrapping them with a "surrogate device". Thereby, the surrogate device - which could be software or hardware - provides the required functionality and information to make legacy systems become part of the proposed semantic system providing means for automatic on-demand runtime reconfiguration.

As a prerequisite it is assumed that the there is a running building automation system already with the installed devices being engineered and configured to actually deliver their intended functionality. Devices actually might be able to deliver different kinds of functionality (which might even exclude each other) depending on their configuration. So it is important that they are configured in a way to provide the intended functionality.

The new inventive method requires device information, information about the context of the device installation and the device targeted functionalities - or at least partial information in case automatic reconfiguration during runtime is sufficient.

Thus, the following information - or parts thereof - should be available during runtime, e.g., based on the approach suggested in the following:
- Function information respective device targeted functionalities, including intended functionalities of the planned building automation system (or of each single system element individually). This information is provided as a "semantic description" in a machine-readable format. This is done, e.g., as export from planning and engineering tools, if functional planning and engineering is supported.
- The semantic description includes device information, i.e., the targeted device types (e.g., light actuator or temperature sensor), their (abstract) mode of operation (e.g., on/off switching or dimming), and an interaction concept based on semantic parameters (e.g., set point as an input, status as an output for light actuator).
- Context information of the device installation is made available in a machine-readable format. To achieve this, the devices could, for instance, gather their context (e.g., mechanisms like scanning of the wireless network as used in Zigbee to obtain the network topology for routing purposes can be used to obtain information about neighbouring devices and thus about the relative locality) and provide it (optionally together with their self-description) over the communication network to the building automation system. Alternatively - i.e., if the technology is not able to provide all required information automatically - additional tools might be used to manually assign the required information (e.g., its location) to the installed device, either by adding it to the device's configuration data that can be requested by the building automation system or by adding it to some external information source (i.e., the UIM as a logical model).

A value-added application or a service (software-based functionality that is provided by a controller or other system element that can execute software) is handled the same way - they is described by elements of the semantic abstraction layer and they is automatically reconfigured using the same UIM (i.e., the semantic information).

According to an advantageous aspect of the invention is the fact that system changes can be monitored and automatically trigger a reconfiguration of the building automation system. Such a system change can, for instance, be
- adding, removing or replacing a device
- updating, extending, or installing a value-added application
- a device or application modification (e.g. repositioning or reconfiguration)
- a re-planning of the targeted system functionalities, e.g., by the system integrator using a system engineering tool. That is, the output of engineering is a functional specification of the intended building automation system.

Exemplary embodiments of the present invention as well as advantageous refinements are described in more detail in conjunction with the accompanying drawings, in which:
- **Fig.** 1: shows an exemplary automatic on-demand configuration of a building or home automation system based on a unified information model,
- **Fig.** 2: shows an exemplary sematic gateway, and
- **Fig.** 3: shows an example for semantic mapping unified information by using to simply drag-and-drop device functions.

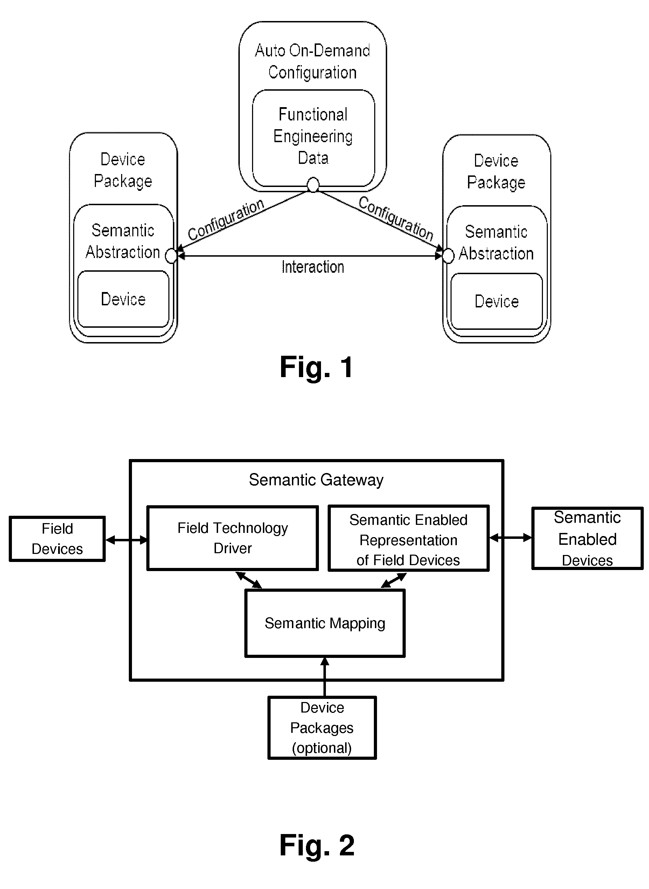

Fig. 1 shows an exemplary block diagram of automatic on-demand configuration in a a building or home automation system based on a unified information mode.

Function information respective device targeted functionalities, including intended functionalities of the planned building automation system is provided as a "semantic description" in a machine-readable format. This is done, e.g., as export from planning and engineering tools, if functional planning and engineering is supported.

For such reconfigurations, a semantic description of the device targeted functionalities is correlated ("*brought together*") with the information obtained from the devices and the context of the device installation.

According to an aspect of the present invention so called "device packages" are provided to map device information of a specific technology to commonly defined semantic information of the devices. For instance, a device package is provided a mapping of a technology-specific type id to a commonly defined semantic abstraction that can be applied to that device.

Device packages are implemented for instance as simple mapping in a structured configuration file (e.g., XML, JSON) or as programmatic mappings contained in code (e.g., C# or Java Annotations). In addition, so called "drivers" can be used to provide the actual integration with the technical system by implementing the specific type model of a single technology (e.g., KNX or BACnet) in order to make it understandable to the system.

The correlation of the different information or data is another key aspect of this invention - as it is an enabler for automatic reconfiguration. Therefore, a common model for the information is required - in our approach the Unified Information Model (UIM) is used to describe the actual system setup side by side with the planned system setup. The actual system setup describes the current configuration, including the system functionality as well as the devices providing the system functionality.

In addition, the detected system change is described as part of the actual system setup, e.g., as an event. The planned system setup describes the intended system configuration after reconfiguration, e.g., the original functional configuration in case of replacements or the new functional configuration in case of a re-planning. Based on the information about planned system setup as well as the actual system setup, which is available from the UIM (e.g., by self-describing devices or manually created device packages or API annotations), it is possible to determine (e.g., using a mapping from devices to their semantic abstraction that was used in the planned system setup or a solver matching devices' capabilities available in the Unified Information Model to the planned system setup) which devices have to interact and how these devices have to be configured accordingly. The so-called "translation" on technology level (e.g., BACnet and KNX) is also automatically defined and executed by an automation controller using technology-specific information, e.g., provided by a driver.

Based on the Unified Information Model, configuration details can now be automatically determined, (e.g., the device packages can provide technology or device specific rules or business logic that is used to configure the device based on the selected semantics or function set of the planned system setup), such as:
- Which of the installed devices can be used to implement a planned functionality
- Which operation mode has to be used therefore
- How do the devices have to interact to fulfil a planned system function
- How do they have to communicate accordingly
- How has the transmitted information to be handled or converted
- Which access rights have to be assigned to the devices and functions

The resulting configuration details are finally downloaded to the devices. The finally downloaded to the devices might include a mapping of these configuration details that are based on the semantic abstraction towards technology or device specific parameters.

Alternatively the configuration details are changed directly on the device, e.g. in case of distributed systems.

As explained previously, the automatic configuration makes use of the information from the device information, information about the context of the device installation and the device targeted functionalities.

In case of partially missing information a semi-automatic configuration mechanism can be applied: missing information can, for instance, be determined automatically and shown to the system integrator or system operator through a runtime configuration tool in order to approve the suggested configuration. If the information base is sufficient that these configuration details can be automatically determined, mechanisms for automatic generation of the device configuration can be executed after approval. If not, the runtime configuration tool can be used to manually enter the missing information and then let the system semi-automatically determine and execute the configuration.

Systems, which are not providing sufficient information base for device information, information about the context of the device installation and the device targeted functionalities can be wrapped by a so called "surrogate device" in order to provide or expand their self-description. This also holds for proprietary systems, e.g., if the vendor doesn't want his system to open up its standards, a surrogate device could be used for integration. The wrapping can, thereby, happen in software (e.g., running additional software modules on the legacy device) or in hardware (e.g., providing a separate gateway device to act as surrogate to all subnet's devices).

Field technology "drivers" can be used to provide the actual integration of such legacy systems. A driver could, for instance, implement the specific type model of a single technology (e.g., KNX or BACnet) in order to make it understandable to the system.

In addition, the "device packages" can be provided to map device information of a specific technology to commonly defined semantic information, e.g., a technology-specific type id to a common defined semantic abstraction that can be applied to that device. (see the "Device Package" in Figure 1). Device packages could, for instance, be implemented as simple mappings in a structured configuration file (e.g., XML, JSON) or as programmatic mappings contained in the code (e.g., C# or Java Annotations).

In summary, a configuration can be split into a technology-specific part and a device-specific part. The "driver" provides the technology-specific parts; the device package, on the other hand, the device-specific parts and the mapping to the semantics. This also means that a software or hardware component that provides such a driver to wrap another technology acts like a "semantic gateway", creating a semantic system by integrating a legacy system. Fig. 2 shows an exemplary sematic gateway.

In addition to extending the information or data about the devices themselves the context of the device installation and the device functionalities, such a semantic gateway might also provide translation capabilities (protocols, data formats, and especially semantics).

More detailed explanations and specific examples on how such reconfiguration actually could be done and which steps are executed, can be found in the following example.

To clarify the previously described concepts of this invention, an example is provided in the following. The building type for the example is assumed to an office building - hotels or schools might also have been example building types, providing very similar characteristics than office buildings. As a simplification, it is only looking at the lighting subsystem in this example. Alternatives could have been to look only at shading, HVAC, or security subsystems.

With respect to devices, it is used the following exemplary list - as said, with focus on lighting:

| Device Type | (1): Device Information | (2): context Information | (3): function information |
|---|---|---|---|
| Light Actuator 1 | KNX | Room 1 | Controlled by light switch located in same room as well as building-wide light switch. Controls light(s) in the room. |
| Light Actuator 2 | KNX | Room 2 | |
| Light Switch 1 | ZigBee | Room 1 | Controls light actuator in the same room. |
| Light Switch 2 | KNX | Room 2 | |
| Light Switch 3 | BACnet | Control room | Building-wide lights control |
| Presence Detector 1 | BACnet | Room 1 | Detects people's movement within the room. |

As can be seen from the table, regarding functional information (3) it is defined that all light actuators in a room are controlled by all light switches located in the same room AND that all devices light actuators in a building are controlled by a building-wide light switch located in the control room. Regarding devices information (1), for each deployed device it is known that two KNX devices implement a light actuator, and one Zigbee device, one BACnet device and one KNX device implement a light switch. Regarding context information (2), it is known that the KNX light actuators are installed in different rooms - one together with a KNX light switch and one with a ZigBee light switch; the BACnet light switch is installed in the control room.

On top of the installed devices, it is also assumed an exemplary value-added application to be available for one of the rooms: occupancy control. In order to achieve such an application, at least a presence detector has to be available in the room to be controlled. Such detector is defined to be a BACnet device in our example (see table above).

Having defined the basic, simplified example, it is now exemplarily sketch the key ideas of this invention. The assumption for this example is that the information on (1), (2), (3) is available digitally as part of the Unified Information Model (UIM). Thus, the following re-configurations of the system during runtime happen automatically based on the unified model, integrating all information and making semantics as well as technology-specific details available.

Automatic configuration of the lighting subsystem based on description of functionality received from engineering, i.e., the output of engineering is a functional specification of the intended building automation system. Based on that specification as well as the information available from the UIM (e.g., by self-describing devices or manually created device packages or application programming interface (API) annotations), it is possible to determine which devices have to interact and how these devices have to be configured accordingly, i.e., the corresponding light switches and light actuators automatically find each other and the "translation" on technology level, e.g., between BACnet light switch and KNX light actuator are also automatically defined and executed by an automation controller. Similarly, the value-added application is able to self-configure by finding the light actuator of room 1 in order to switch on the light as soon as it detects people being in the room. The presence detector is not connecting to the light switch, as the light switch is intended for manual interaction only. Instead, it sends its commands directly to the light actuator. The application doesn't care for the technology used by the light switch, nor does it need to be manually engineered to find and talk to the light switch.

In case of the installation of other value-added applications (or services), e.g. when Building Automation services like *building monitoring* or *media-control* is installed in a Building Automation controller, the services can be configured to communicate with the appropriate devices the same way as described with, for instance, occupancy control.

Following the automatic reconfiguration with replacing a device is described:
- The system detects that a device, e.g., light actuator 1 in room 1 is removed.
- Light switch 1 detects on the semantic level that there is no destination (e.g., actually implemented function block set method) to send commands any more.
- Presence detector 1 detects that there is no destination to send commands any more.
- A new BACnet light actuator is added into the network: as it includes a "device package" (i.e., a package containing device information, location information, as well as a mapping to function block and semantic parameters) and thus, provides all required information based on the Unified Information Model (defining, for instance, the function block types of the building automation system) to the system and requesting other devices.
- Light switch 1 detects the new device and the fact that it offers light actuator functionality.
- Light switch 1 logically connects to the new light actuator on a semantic level, i.e., without knowing its actual technical details. The automation controller (software or hardware with software) does the actual mapping on communication level based on technology "drivers" and its semantic and technological knowledge taken from the Unified Information Model.
- Presence detector 1 also detects the new light actuator and logically connects to it similar to light switch 1.
- The entire system is up and running again with a new device but same overall functionality.

Adding a new device, e.g., a Zigbee light switch to room 2: as soon as the light switch is mounted and starts operating, it can be automatically configured to communicate with the KNX light actuator in the same room by autonomously finding the semantic light actuator device (function information) in the same room (location information) and using an appropriate automation controller (software package on an existing device or additional hardware containing controller software) to translate between possibly different technologies (device as well as function information)

Semi-automatic configuration using a runtime configuration tool: In case, the building user wants to reconfigure the system (e.g., configure a newly added light switch at the far end of a big meeting room to act as second switch in a room) but the system doesn't have all information necessary to perform an automatic configuration (e.g., it is not known that the new light switch is installed in room 1, i.e., its location is unknown), the runtime configuration tool allows the user to simply drag-and-drop device functions (drag the new light switch's ON/OFF function to the light actuator's SET function. All the rest of the configuration is then again detected and implemented automatically.

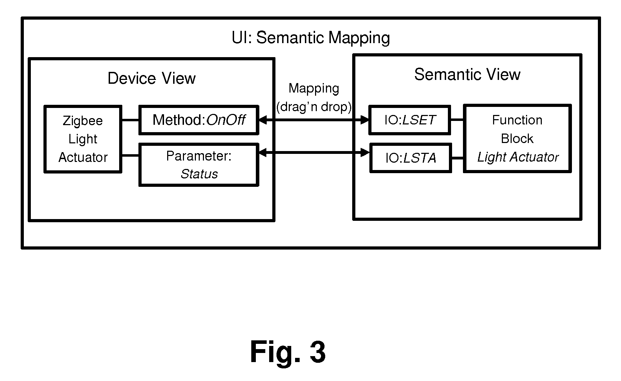

Fig. 3 shows an example for sematic mapping Unified Information (UI) by using simply drag-and-drop device functions.

In summary, during on-demand configuration or re-configuration all information or data are brought together in the Unified Information Model. Based on the Unified Information Model, the devices and value-added applications or services are configured themselves by finding the inputs and outputs they need in order to achieve their specific functionality. This is only possible based on the semantic knowledge of field devices and bridging technologies by the sematic description of the devices.

According to an advantageous aspect of the invention a cloud, controller or device functionality is provided as execution environment. The aforementioned tasks are basically intended to be executed during runtime within the devices of the building automation system. However, the mechanisms can be also executed in any other environment or system element. Such as a device, a controller or software running in the cloud environment can maintain the UIM (or parts of it) in order to reconfigure the building automation systems or sub- systems.

According to a further advantageous aspect of the invention an additional configuration tool is provided. If an automatic configuration is not possible and for the semi-automatic or manual mechanisms a user interaction is required, the additional configuration tool might be required.

According to an embodiment of the invention it is provided that a device self-description or device package can also include information or data about the visualization of the device. This might include a self-representation of the device that can be used to set up specific device parameters.

According to an advantageous embodiment of the invention also business logic functionality is provided. The driver or device package might also include specific business logic functionality that has to be applied to set up technology or device specific parameters. This can include the visualization and mapping of the automatically generated configuration.

Advantageous refinements of the invention refer to use semantic modelling in order to configure or re-configure building automation devices or (sub-)systems (semi-) automatically during system runtime on demand configuration, i.e. especially allowing for changes, upgrades or replacements, independent of actual technology and without expert knowledge.

The new inventive method of an automatic on-demand configuration in an automation system or sub/ system of a building automation system is based on the unified information model allowing for semantic function-based configuration to automatically link sensors to related actuators in a room, a simplified workflow for maintenance, upgrades, extensions, optimization, semantic abstraction used for applications "on top" (e.g. big data, services, visualization, etc.) and technology independent engineering, device integration across various field technologies. Device Package (i.e. expert knowledge) is required only once per device type and only during technology development and not during engineering.

## Claims

1. Method for implementing an automatic on-demand configuration or reconfiguration in a building automation system or sub- system during runtime based on information or data representing a plurality of devices of the building automation system comprising a unified information model wherein information or data is commonly available in a machine-readable format based on a sematic abstraction of the devices and during on-demand configuration or reconfiguration all information or data are brought together in the Unified Information Model by describing, importing, or on demand reading information about the devices, about the context of their installation and about their provided functionality as well as applying reasoning functionality such as match-making between the semantic abstraction for devices that was used for planning of the system and the device specific information or automatic solvers.

2. Method according to claim 1, wherein the information or data comprise device information, information about the context of the device installation and the device targeted functionalities - or at least partial information in case automatic reconfiguration during runtime is sufficient.

3. Method according to claim 1 or 2, wherein the configuration or re-configuration apply to adding, removing or replacing devices, updating, extending, installing value-added applications, device or application modifications as positioning or reconfiguration, re-planning of the targeted system functionalities.

4. Method according to any of the preceding claims, wherein based on the Unified Information Model, the devices and value-added applications or services of the building automation system are configured themselves by finding the inputs and outputs they need in order to achieve their specific functionality based on the semantic knowledge of field devices and bridging technologies by the sematic description of the devices.

5. Method according to any of the preceding claims, wherein for reconfigurations, a semantic description of the device targeted functionalities is correlated with the information obtained from the devices and the context of the device installation.

6. Method according to any of the preceding claims, wherein device packages are provided to map device information of a specific technology to commonly defined semantic information of the devices.

7. Method according to claim 6, wherein the device packages are implemented as simple mapping in a structured configuration file or as programmatic mappings contained in software code.

8. Method according to any of the preceding claims, wherein the Unified Information Model contains a planned system setup as well as the actual system setup, in which the actual system setup describes the current configuration, including the system functionality as well as the devices providing the system functionality and the planned system setup describes the intended system configuration after reconfiguration.

9. Method according to any of the preceding claims, wherein based on the Unified Information Model, configuration details are automatically determined, which of the installed devices are used to implement a planned functionality and operation mode is used therefore, how the devices interact to fulfil a planned system function and communicate accordingly, handle or convert transmitted information to be and/or assign access rights to the devices and functions and the resulting configuration details are finally downloaded to the devices.

10. Method according to any of the preceding claims, wherein a semantic systems are provided that are able to integrate legacy subsystems by wrapping them with a surrogate device and the surrogate device is provided the required functionality and information to make legacy systems become part of the proposed semantic system providing means for automatic on-demand runtime reconfiguration.

11. Method according to any of the preceding claims, wherein a targeted automatism is provided requiring information about the devices, their context, and functionality to be available in a machine-readable format and based on this the building automation system automatically is reconfigured in cases of system modifications, such as replacing, removing, or adding a device as well as updating, extending, or installing a value-added application.

12. Method according to any of the preceding claims, wherein a cloud, a controller or device functionality is provided as execution environment of the method.
